# EUROPÄISCHE PATENTSCHRIFT

(11) **EP 2 345 854 B1**
(45) Veröffentlichungstag und Bekanntmachung des Hinweises auf die Patenterteilung: **19.04.2017**
(21) Anmeldenummer: 10193606.0
(22) Anmeldetag: 03.12.2010
(51) Int. Cl.: F24F 11/02, F24F 5/00, F24F 12/00, F24F 3/14

(54) **Sorptionswärmetauscher und Steuerung hierfür**
Sorption heat exchanger and control for same
Echangeur thermique à sorption et commande associée

(30) Priorität: 05.12.2009 DE 102009057157
(43) Veröffentlichungstag der Anmeldung: 20.07.2011
(73) Patentinhaber: Robert Bosch GmbH, 70442 Stuttgart (DE)
(72) Erfinder: Danne, Thomas, 71634 Ludwigsburg (DE); Weil, Thomas, 71665 Vaihingen (DE); Preissner, Marcus, 71665 Vaihingen (DE)

(56) Entgegenhaltungen:
- EP-B1- 1 508 015
- WO-A1-2005/119145
- DE-A1- 19 750 838
- US-A- 5 950 447
- US-B1- 6 318 106

## Beschreibung

Die Erfindung betrifft ein Verfahren zur Steuerung einer in einem offenen System betriebenen Sorptionswärmetauschervorrichtung, insbesondere einer Sorptionswärmetauschervorrichtung zum Frischluftkonditionieren, nach dem Oberbegriff des Patentanspruchs 1.

Weiter betrifft die Erfindung eine Vorrichtung zur Steuerung einer in einem offenen System betriebenen Sorptionswärmetauschervorrichtung, insbesondere einer Sorptionswärmetauschervorrichtung zum Frischluftkonditionieren, gemäß dem Oberbegriff des Anspruchs 5.

Zudem betrifft die Erfindung eine in einem offenen System betriebene Sorptionswärmetauschervorrichtung, insbesondere eine Sorptionswärmetauschervorrichtung zum Frischluftkonditionieren, gemäß dem Oberbegriff des Anspruchs 13.

Sorptionswärmetauscher und Verfahren für deren Betrieb sind allgemein aus dem Stand der Technik bekannt.

Aus der EP 1 508 015 B1 ist ein Sorptionswärmetauscher mit einer Mehrzahl von Wärmetauscherkanälen in einem thermischen Kontakt mit entsprechenden Sorptionskanälen bekannt, wobei die Sorptionskanäle ein Sorptionsmaterial umfassen, welches auf ihren inneren Oberflächen befestigt ist und die Wärmetauscherkanäle dafür vorgesehen sind, dass sie ein Kühlfluid aufnehmen, und wobei die Sorptionskanäle dafür vorgesehen sind, dass sie ein zu konditionierendes Fluid aufnehmen, von welchem mindestens eine Komponente zu extrahieren ist, und wobei das Sorptionsmaterial für die Sorption mindestens einer Komponente des zu konditionierenden Fluids geeignet ist. Das Kühlfluid, insbesondere feuchte Luft, kann durch Befeuchtungskomponenten vor dem Eintritt in den Wärmetauscher gekühlt werden, wobei Befeuchtungskomponenten für die Befeuchtung oder die Übersättigung des Kühlfluids vorhanden sind.

Der bekannte Sorptionswärmetauscher wird zur Frischluftkonditionierung genutzt. Hierbei wird Luft in einer Komponente sowohl entfeuchtet als auch gekühlt. Um dies quasikontinuierlich durchzuführen werden zwei Sorptionswärmetauscher benötigt. In einem der zwei Sorptionswärmetauscher findet die Kühlung und Entfeuchtung statt. Da die Sorptionswärmetauscher nur eine bestimmt Menge Feuchtigkeit aufnehmen können, wird ein Sorptionswärmetauscher nach einer bestimmten Zeit regeneriert, d. h. die Feuchtigkeit wird ausgetrieben. Bei zwei Sorptionswärmetauschern befindet sich danach jeweils ein Sorptionswärmetauscher in der Kühl- und Entfeuchtungsphase - im Folgenden als Adsorption bezeichnet- und ein Sorptionswärmetauscher in der Regenerationsphase - diese ist aufgeteilt in Desorption und Zwischenkühlen -, wobei die Zustände je Sorptionswärmetauscher zyklisch wechseln, um einen quasikontinuierlichen Betrieb sicherzustellen. Der zyklische Betrieb ist auch mit mehr als zwei Sorptionswärmetauschern denkbar.

Nachfolgend werden die einzelnen Zustände gemäß dem Stand der Technik im Detail beschrieben.

Auf dem Gebiet der Klimatechnik werden offene und geschlossene Sorptionssysteme unterschieden. Geschlossene Sorptionssysteme (mit Adsorptionskältemaschine bzw. Absorptionskältemaschine) basieren auf durch thermische Energie angetriebene Kältemaschinen. Bei diesen Verfahren kommt das zu kühlende Medium nicht mit dem Sorbens, d.h. Sorptionsmittel (z.B. Ammoniak, Lithiumbromid oder Silicagel) in Berührung. Häufig ist das Kältemittel Wasser. Meist wird analog zu einer konventionellen Kompressionskältemaschine Kaltwasser erzeugt, welches dann zur Kühlung eines Luftstroms an einen entsprechenden Wärmeübertrager geführt wird. Die Luft kommt also ebenso wie das Kühlwasser mit dem Sorptionsmaterial nicht in Berührung. Bei einem offenen Sorptionssystem kommt die zu kühlende und zu entfeuchtende Luft dagegen in direkten Kontakt mit einem Sorptionsmittel (z.B. Lithiumchlorid oder Siliacagel). Die für die Kühlung der Luft benötigte Wärmeabfuhruhr wird im Allgemeinen durch direkte oder indirekte Verdunstungskühlung realisiert.

Adsorption bedeutet im Sinne der vorliegenden Erfindung, dass Außenluft durch die Sorptionsseite des Sorptionswärmetauschers geführt und anschließend in den Gebäudezuluftkanal als Zuluft geleitet wird - es handelt sich also um ein offenes Sorptionssystem. Das sich im Sorptionswärmetauscher befindliche Sorbens wird dabei beladen, d. h., es nimmt Feuchtigkeit aus der Luft auf, wodurch die Luft getrocknet wird. Dabei entsteht Sorptionswärme. Um Letztere abzuführen und um gleichzeitig die Luft zu kühlen, wird auf der Kühlseite des Sorptionswärmetauschers die Gebäudeabluft genutzt, welche vor dem Eintritt in den Sorptionswärmetauscher durch eine adiabate Verdunstungskühlung gekühlt wird. Die Gebäudeabluft, welche nach diesem Prozess warm und feucht ist, wird anschließend als Fortluft fortgeführt. Dieser Prozess ist zeitlich begrenzt, da das Sorbens im Sorptionswärmetauscher nur eine endliche Menge Feuchtigkeit aufnehmen kann. Des Weiteren nimmt die Geschwindigkeit der Sorption mit steigender Beladung ab. Desorption bedeutet im Sinne der vorliegenden Erfindung, dass in dem Sorptionswärmetauscher, welcher gerade nicht für die Frischluftkonditionierung genutzt wird, das adsorbierte Wasser aus dem Sorbens ausgetrieben wird. Dazu wird in einer der denkbaren Methoden erhitzte Luft bei ca. 65-85°C durch den Sorptionskanal geleitet und als Fortluft fort geführt.

Zwischenkühlen bedeutet im Sinne der vorliegenden Erfindung, dass, da die Sorptionswärmetauscher nach der Desorption aufgeheizt sind, diese zwischen Desorption und Adsorption gekühlt werden, damit die sensible Wärmemenge, welche im Sorptionswärmetauscher gespeichert ist, nicht während der Adsorptionsphase an die Gebäudezuluft abgegeben wird. Hierzu wird Außenluft durch die adiabate Verdunstungskühlung geleitet und dem Fortluft-Luftschacht zugeführt. Dies kühlt den Sorptionswärmetauscher von der Kühlseite aus.

Hieraus ergibt sich, dass beide Sorptionswärmetauscher abwechselnd in zwei verschiedenen Modi bzw. drei verschiedenen Phasen betrieben werden: der Adsorption, d. h. Kühlen und Entfeuchten der Zuluft, der Regeneration, bestehend aus Desorption, d. h. Austreiben des Wassers aus dem Sorbens und der Zwischenkühlung, d. h. Vorkühlen des Sorptionswärmetauschers vor der erneuten Adsorption. Hierzu müssen die verschiedenen Luftströme (Zu-, Ab-, Außen- und Fortluft) auf unterschiedliche Weise geschaltet und unter Umständen auch erhitzt werden, damit die beiden Sorptionswärmetauscher in dem jeweils passenden Modus betrieben werden.

Um die verschiedenen Luftströme zu schalten, sind einige Klappen oder allgemeiner Schalteinheiten oder Stellmittel erforderlich. Gemäß dem Stand der Technik sind für ein Beschaltungskonzept mindestens fünf Auf/Zu-Klappen pro Sorptionswärmetauscher zu verwenden.

Aus US 6 318 106 B1 ist eine entfeuchtende Klimatisierungsvorrichtung bekannt, die einen Pfad für Prozessluft aufweist, bei dem der Prozessluft durch einen ersten Entfeuchter Feuchtigkeit entzogen wird und die danach durch eine Niedrigtemperaturwärmequelle einer Wärmepumpe gekühlt wird. Weiterhin weist die entfeuchtende Klimatisierungsvorrichtung einen Pfad für Regenerationsluft auf, die durch eine Hochtemperaturwärmequelle der Wärmepumpe erwärmt wird und anschließend zur Desorption von Feuchtigkeit durch den ersten Entfeuchter geleitet wird. Hierbei sind der Prozessluftstrom und der Regenerationsluftstrom so angeordnet, dass sie wechselweise durch den ersten Entfeuchter fließen. Die entfeuchtende Klimatisierungsvorrichtung weist hierbei mindestens eine Adsorptionswärmepumpe sowie einen Primär- und Sekundärwärmetauscher in geschlossener Bauform auf. Der Primär- und Sekundärwärmetauscher verfügen jeweils über einen Entfeuchtungswärmetauscher, der ein zweites Entfeuchtungsmittel zur Adsorption oder Desorption eines Kühlmittels aufweist. Außerdem ist ein Kühlmittelwärmetauscher vorgesehen, der zur Verdampfung oder Kondensation des Kühlmittels dient. Hierbei stehen der Primär- und Sekundärwärmetauscher über eine Einengung miteinander in Verbindung.

Die Anordnung der US 6 318 106 B1 ist derart ausgestaltet, dass die Prozessluft und die Regenerationsluft wechselweise ohne das Durchlaufen einer Zwischenkühlphase durch die Kühlmittelwärmetauscher der ersten oder zweiten Wärmetauschergruppe der Adsorptionswärmepumpen fließen. Zudem wird ein Wärmemittel, das die Adsorptionswärmepumpen antreibt zu den Entfeuchtungswärmetauschern geleitet, durch die es aufgeheizt wird. Die Entfeuchtungswärmetauscher stehen in direkter Verbindung mit den Kältemittelwärmetauschern, durch die die Regenerationsluft strömt.

Der Erfindung liegt die Aufgabe zugrunde, eine Vorrichtung und ein Verfahren zur Steuerung eines in einem offenen System betriebenen Sorptionswärmetauschers zu schaffen, welche diesen Nachteil überwinden und der insbesondere eine reduzierte Klappenanzahl und reduzierte Zahl an Stelleinheitantrieben aufweist, um den Herstellungs- und Montageaufwand sowie die Baugröße zu verringern, und die Betriebssicherheit zu erhöhen.

Weiter liegt der Erfindung die Aufgabe zugrunde, eine in einem offenen System betriebene Sorptionswärmetauschervorrichtung mit einer erfindungsgemäßen Vorrichtung zu schaffen, welche eine effektive Arbeitsweise bei reduziertem Gesamtaufwand, insbesondere geringerem Bauraum, verringerter Klappenanzahl und verringerter Zahl der Stelleinheitantriebe garantiert.

Erfindungsgemäß wird dies durch die Gegenstände mit den Merkmalen des Patentanspruches 1, des Patentanspruchs 5 und des Patentanspruchs 13 gelöst. Vorteilhafte Weiterbildungen sind den Unteransprüchen zu entnehmen.

Das erfindungsgemäße Verfahren zur Steuerung einer als offenes System ausgeführten Sorptionswärmetauschervorrichtung, insbesondere einer Sorptionswärmetauschervorrichtung zum direkten Frischluftkonditionieren, bei der mindestens zwei Sorptionswärmetauscher mit je einer Sorptionsseite und einer Kühlseite wechselseitig (wechselweise, abwechselnd) in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen, wobei in der Adsorptionsphase Außenluft durch die Sorptionsseite des Sorptionswärmetauschers geführt und anschließend in einen Gebäudezuluftkanal geleitet wird, wobei ein im Sorptionswärmetauscher befindliches Sorbens durch Aufnahme von Feuchtigkeit aus der Außenluft beladen wird, wobei zum gleichzeitigen Kühlen der Außenluft und Abführen entstehender Sorptionswärme auf der Kühlseite des Sorptionswärmetauschers Gebäudeabluft genutzt wird, welche vor dem Eintritt in den Sorptionswärmetauscher durch eine adiabate Verdunstungskühlung gekühlt wird, und wobei die nach dem Prozess warme und feuchte Gebäudeabluft als Fortluft fortgeführt wird, wobei in der Desorptionsphase in dem Sorptionswärmetauscher, welcher gerade nicht für die Frischluftkonditionierung genutzt wird, das adsorbierte Wasser aus dem Sorbens ausgetrieben wird, wofür erhitzte Luft bei circa 65-85°C durch den Sorptionskanal geleitet und als Fortluft fortgeführt wird, und wobei der nach der Desorptionsphase aufgeheizten Sorptionswärmetauscher in der Zwischenkühlphase zwischen der Desorptionsphase und der Adsorptionsphase gekühlt wird, wofür Außenluft durch die adiabate Verdunstungskühlung geleitet und einem Luftschacht für Fortluft zugeführt wird, wodurch der Sorptionswärmetauscher von der Kühlseite aus gekühlt wird, ist dadurch gekennzeichnet, dass maximal vier Schalteinheiten pro Sorptionswärmetauscher angesteuert werden, um die zwei Betriebsmodi mit den drei Phasen der Sorptionswärmetauscher zu realisieren.

In einer Ausführungsform des erfindungsgemäßen Verfahrens ist vorgesehen, dass jeweils eine der Schalteinheiten eines Sorptionswärmetauscherkreises gekoppelt mit einer dazu korrespondierenden Schalteinheit des anderen Sorptionswärmetauscherkreises angesteuert wird.

Bei einer weiteren Ausführungform des erfindungsgemäßen Verfahrens ist vorgesehen, dass die gekoppelten Schalteinheiten über einen gemeinsamen Antrieb angesteuert werden.

Bei einer weiteren Ausführungform des erfindungsgemäßen Verfahrens ist vorgesehen, dass Außenluft welche, je nach Betriebszustand des jeweiligen Sorptionswärmetauschers, von einer Außenluftzufuhreinrichtung zuvor erwärmt oder nicht erwärmt wurde, separat dem jeweiligen Sorptionswärmetauscher zugeführt wird.

Die erfindungsgemäße Vorrichtung zur Steuerung einer als offenes System ausgeführten Sorptionswärmetauschervorrichtung, insbesondere einer Sorptionswärmetauschervorrichtung zum direkten Frischluftkonditionieren, bei der mindestens zwei Sorptionswärmetauscher mit je einer Sorptionsseite und einer Kühlseite wechselseitig (wechselweise, abwechselnd) in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen, wobei in der Adsorptionsphase Außenluft durch die Sorptionsseite des Sorptionswärmetauschers geführt und anschließend in einen Gebäudezuluftkanal geleitet wird, wobei ein im Sorptionswärmetauscher befindliches Sorbens durch Aufnahme von Feuchtigkeit aus der Außenluft beladen wird, wobei zum gleichzeitigen Kühlen der Außenluft und Abführen entstehender Sorptionswärme auf der Kühlseite des Sorptionswärmetauschers Gebäudeabluft genutzt wird, welche vor dem Eintritt in den Sorptionswärmetauscher durch eine adiabate Verdunstungskühlung gekühlt wird, und wobei die nach dem Prozess warme und feuchte Gebäudeabluft als Fortluft fortgeführt wird, wobei in der Desorptionsphase in dem Sorptionswärmetauscher, welcher gerade nicht für die Frischluftkonditionierung genutzt wird, das adsorbierte Wasser aus dem Sorbens ausgetrieben wird, wofür erhitzte Luft bei circa 65-85°C durch den Sorptionskanal geleitet und als Fortluft fortgeführt wird, und wobei der nach der Desorptionsphase aufgeheizten Sorptionswärmetauscher in der Zwischenkühlphase zwischen der Desorptionsphase und der Adsorptionsphase gekühlt wird, wofür Außenluft durch die adiabate Verdunstungskühlung geleitet und einem Luftschacht für Fortluft zugeführt wird, wodurch der Sorptionswärmetauscher von der Kühlseite aus gekühlt wird, ist dadurch gekennzeichnet, dass maximal vier Schalteinheiten pro Sorptionswärmetauscher angesteuert werden, um die zwei Betriebsmodi mit den drei Phasen der Sorptionswärmetauscher zu realisieren.

Bei einer weiteren Ausführungsform der vorliegenden Erfindung ist vorgesehen, dass jeweils mindestens eine Schalteinheit eines Sorptionswärmetauscherkreises mit einer dazu korrespondierenden Schalteinheit des anderen Sorptionswärmetauscherkreises gekoppelt ist.

In noch einer weiteren Ausführungsform der vorliegenden Erfindung ist vorgesehen, dass mindestens zwei miteinander gekoppelte Schalteinheiten jeweils als ein gemeinsames Mehrwegeventil ausgebildet sind.

In noch einer weiteren Ausführungsform der vorliegenden Erfindung ist vorgesehen, dass mindestens zwei Mehrwegeventile mit einem gemeinsamen Antrieb angesteuert sind.

In noch einer weiteren Ausführungsform der vorliegenden Erfindung ist vorgesehen, dass mindestens eine Schalteinheit ein vorgespanntes Rückschlagventil umfasst.

In noch einer weiteren Ausführungsform der vorliegenden Erfindung ist vorgesehen, dass alle Schalteinheiten eines Sorptionswärmetauschers, bevorzugt alle Schalteinheiten aller Sorptionswärmetauscher, als eine gemeinsame Mehrwegeschalteinheit ausgebildet sind.

In noch einer weiteren Ausführungsform der vorliegenden Erfindung ist vorgesehen, dass ein über Schalteinheiten verzweigtes Leitungssystem mit mehreren Leitungsabschnitten vorgesehen ist, wobei für jeden Sorptionswärmetauscher ein separates Leitungssystem für die Außenluftzufuhreinrichtung vorgesehen ist.

Bei einer weiteren Ausführungsform der vorliegenden Erfindung ist vorgesehen, dass eine separate Außenluftzufuhreinrichtung vorgesehen ist, welche je nach Betriebszustand der Sorptionswärmetauscher die Außenluft über einen erwärmungseinheitenfreien Pfad oder einen Pfad mit Erwärmungseinheiten zu den jeweiligen separaten Leitungssystemen leitet.

Ein Ausführungsbeispiel der Vorrichtung sieht vor, dass die Sorptionswärmetauschervorrichtung als zwei identische Sorptionswärmetauscherkreisläufe, bestehend aus je vier Schalteinheiten, einer adiabaten Verdunstungskühlung und einem Sorptionswärmetauscher, ausgebildet ist. Durch die identische Komponentenanordung ist ein einfacher Aufbau möglich.

Ein weiteres Ausführungsbeispiel sieht vor, dass korrespondierende Schalteinheiten der beiden Sorptionswärmetauscherkreisläufe als 3/2-Wegeventil ausgebildet sind. Dies ist beispielsweise für zwei Schalteinheitspaare vorgesehen. Weiter ist beispielsweise ein gemeinsamer Antrieb der 3/2-Wegeventile realisiert, da die Umschaltung der Ventile immer zeitgleich erfolgt.

Noch ein weiteres Ausführungsbeispiel der vorliegenden Erfindung sieht vor, dass mindestens je zwei der ungekoppelten Schalteinheiten, die in einer Strömungsrichtung entweder beide vor oder hinter oder eine vor und eine hinter dem jeweiligen Sorptionswärmetauscher angeordnet sind, als vorgespannte Rückschlagklappen ausgebildet sind. Hierdurch lassen sich aktive Antriebe reduzieren.

Wiederum ein anderes Ausführungsbeispiel der vorliegenden Erfindung sieht vor, dass alle Schalteinheiten eines Sorptionswärmetauscherkreislaufes durch eine gemeinsame Mehrwegeschalteinheit ausgebildet sind, sodass die (Sorptionswärmetauscher)Vorrichtung pro Sorptionswärmetauscher je eine Mehrwegeschalteinheit aufweist.

Die erfindungsgemäße als offenes System ausgeführte Sorptionswärmetauschervorrichtung, insbesondere eine Sorptionswärmetauschervorrichtung zum Frischluftkonditionieren, bei der mindestens zwei Sorptionswärmetauscher mit je einer Sorptionsseite und einer Kühlseite wechselseitig (wechselweise, abwechselnd) in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen, wobei in der Adsorptionsphase Außenluft durch die Sorptionsseite des Sorptionswärmetauschers geführt und anschließend in einen Gebäudezuluftkanal geleitet wird, wobei ein im Sorptionswärmetauscher befindliches Sorbens durch Aufnahme von Feuchtigkeit aus der Außenluft beladen wird, wobei zum gleichzeitigen Kühlen der Außenluft und Abführen entstehender Sorptionswärme auf der Kühlseite des Sorptionswärmetauschers Gebäudeabluft genutzt wird, welche vor dem Eintritt in den Sorptionswärmetauscher durch eine adiabate Verdunstungskühlung gekühlt wird, und wobei die nach dem Prozess warme und feuchte Gebäudeabluft als Fortluft fortgeführt wird, wobei in der Desorptionsphase in dem Sorptionswärmetauscher, welcher gerade nicht für die Frischluftkonditionierung genutzt wird, das adsorbierte Wasser aus dem Sorbens ausgetrieben wird, wofür erhitzte Luft bei circa 65-85°C durch den Sorptionskanal geleitet und als Fortluft fortgeführt wird, und wobei der nach der Desorptionsphase aufgeheizten Sorptionswärmetauscher in der Zwischenkühlphase zwischen der Desorptionsphase und der Adsorptionsphase gekühlt wird, wofür Außenluft durch die adiabate Verdunstungskühlung geleitet und einem Luftschacht für Fortluft zugeführt wird, wodurch der Sorptionswärmetauscher von der Kühlseite aus gekühlt wird, ist dadurch gekennzeichnet, dass eine erfindungsgemäße Vorrichtung vorgesehen ist.

Mit dem erfindungsgemäßen Verfahren, der erfindungsgemäßen Vorrichtung und der erfindungsgemäßen Sorptionswärmetauschervorrichtung werden insbesondere die folgenden Vorteile realisiert:
Durch die Reduktion der Anzahl der Schalteinheiten, welche auch als Stellelemente oder Stellmittel bezeichnet werden, von mindestens fünf auf vier oder weniger pro Sorptionswärmetauscher, wird die Prozessführung nicht negativ beeinträchtig. Dadurch lassen sich Herstellungs- und Wartungsaufwand aufgrund eines geringeren Verbaus von weniger - beispielsweise als Klappen ausgebildeten - Schalteinheiten in dem Sorptionswärmetauscher realisieren. Somit ist es mit diesem erfindungsgemäßen Schema möglich, mit verringerter Klappenanzahl die gleichen Betriebsmodi bzw. Phasen wie im Stand der Technik zu verwirklichen, nämlich eine Adsorption, eine Desorption und ein Zwischenkühlen. Um einen weiteren Aufwand zu reduzieren, ist es möglich, mehrere Zwei-Wege-Stellmittel zusammenzufassen, beispielsweise durch eine 3/2-Wegeklappe. Ein weiterer Vorteil wird erreicht, wenn diese 3/2-Wegeklappen mit Hilfe eines gemeinsamen Antriebs gesteuert werden, da hierdurch die Zahl der Antriebe weiter verringert wird. Zudem wird ein weiterer Vorteil dadurch erreicht, dass vorgespannte Rückschlagklappen ohne aktiven Antrieb eingebaut werden. Die Rückschlagklappen können einzelne Zwei-Wege-Stellmittel ersetzen. Eine Rückschlagklappe ist im Allgemeinen kostengünstiger als eine als Auf/Zu-Klappe mit Motor ausgebildete Klappe. Des Weiteren wird der Wartungsaufwand gesenkt, da eine Rückschlagklappe verglichen mit einer motorisierten Auf/Zu-Klappe mechanisch einfacher aufgebaut ist. Außerdem wird für das erfindungsgemäße Beschaltungsschema mindestens ein Antrieb pro Sorptionswärmetauscher weniger benötigt als nach dem Stand der Technik. Dadurch verringern sich der elektrische Verschaltungsaufwand und die anfallenden Herstellung- und Betriebskosten. Die Anzahl der Antriebe kann erfindungsgemäß weiter verringert werden, indem alle Klappen durch beispielsweise je ein Schieberegister pro Sorptionswärmetauscher mit je acht Anschlüssen und drei Schaltstellungen ersetzt werden. Durch die Verwendung von nur einem Schieberegister ist nur ein Antrieb pro Sorptionswärmetauschereinheit erforderlich. Dies ist ein klarer Kostenvorteil. Weiter lässt sich auch die Anzahl der Fehlerquellen reduzieren, da die Schieberegister so ausgelegt werden, dass ausschließlich die drei erforderlichen Betriebsphasen Adsorption, Desorption und Zwischenkühlung realisierbar sind. Ein fehlerhafter Modus aufgrund einer falsch stehenden Klappe ist alleine durch die Geometrie des Registers ausgeschlossen. Mit der erfindungsgemäßen Verschaltung ist weiter gewährleistet, dass die Kühlseite des Sorptionswärmetauschers während der Desorption verschlossen ist. Dadurch findet kein ungewollter Luftwechsel auf dieser Seite des Wärmetauschers statt und somit verdunstet weniger Wasser auf dieser Seite. Dadurch, dass weniger Wasser verdunstet wird, erhöht sich der Wirkungsgrad des Gesamtapparates signifikant. Um dem ansteigenden Druck, zum Beispiel durch verdunstendes Wasser, auf der Kühlseite während der Desorption entgegenzuwirken, ist im Schieberegister eine Verbindung mit kleinem Durchmesser von Kühlseite zur Fortluft vorgesehen.

Die Zeichnungen stellen mehrere Ausführungsbeispiele der Erfindung dar und zeigen in den Figuren:
- Fig. 1: schematisch ein Schaltungsschema einer Sorptionswärmetauschervorrichtung, bestehend aus zwei Sorptionswärmetauschern mit je vier Schalteinheiten,
- Fig. 2: schematisch das Schaltungsschema nach Fig.1 mit sechs Stellgliedern, wobei zwei gekoppelte Schalteinheiten paarweise in eine Schalteinheit integriert sind,
- Fig. 3: schematisch das Schaltungsschema nach Fig. 2 mit zwei als Rückschlagklappen ausgebildeten Schalteinheiten,
- Fig. 4: schematisch das Schaltungsschema nach Fig. 1 mit zwei als Schieberegister ausgebildeten Schalteinheiten und
- Fig. 5: schematisch in einem Querschnitt eine Ausführungsform eines Schieberegisters.

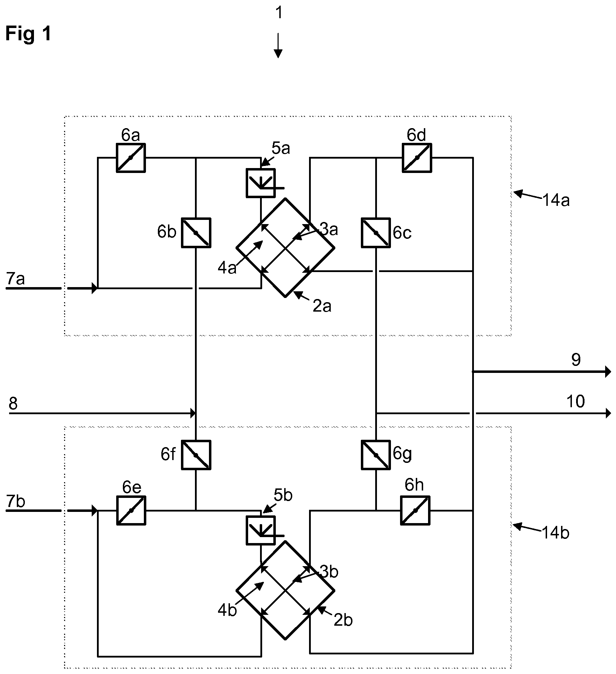

Fig. 1 zeigt schematisch ein Schaltungsschema einer Sorptionswärmetauschervorrichtung 1. Die Sorptionswärmetauschervorrichtung 1, die nach Fig. 1 zur Frischluftkonditionierung ausgebildet ist, umfasst zwei Sorptionswärmetauscher 2a, 2b mit je einer Sorptionsseite 3a, 3b und einer Kühlseite 4a, 4b. Zwei Sorptionswärmetauscherkreise 14a, 14b sind identisch ausgebildet, um zugeführte Außenluft 7a, 7b quasi kontinuierlich zu konditionieren. Zu diesem Zweck wird die Außenluft 7a, 7b und die Gebäudeabluft 8 mit Hilfe der Stellglieder 6a bis 6h in der Weise durch die Sorptionswäretauscherkreise 14a, 14b geleitet, dass die Luftströme entsprechend des aktuellen Betriebszustands über den Sorptionswärmetauscher 2a, 2b zu dem Anschluss für die Gebäudezuluft 10 oder der Fortluft 9 strömen. Zur Steuerung der Sorptionswärmetauschervorrichtung 1 ist eine Vorrichtung zur Steuerung der Sorptionswärmetauschervorrichtung 1 mit acht als Stellgliedern ausgebildeten Schalteinheiten 6a bis 6h vorgesehen. Weiter sind Verdunstungskühlungen 5a, 5b vorgesehen.

Beispielhaft am Sorptionswärmetauscherkreislauf 14a wird nun folgend dargestellt, wie die verschiedenen Betriebszustände realisiert werden.

Während der Adsorption strömt unbehandelte Außenluft vom Anschluss 7a über die Sorptionsseite 3a durch die geöffnete Klappe 6c zum Anschluss der Gebäudezuluft 10. Die Klappen 6a und 6d sind dabei geschlossen, so dass der Strömungsweg eindeutig ist. Bei dem Durchströmen der Sorptionsseite 3a wird die Außenluft im Sorptionswärmetauscher 2a entfeuchtet und gekühlt. Die freigesetzte Sorptionswärme und die sensible Wärme des Außenluftstoms werden von der Luft, welche die Kühlseite 4a durchströmt, fortgeführt. Dieser Luftweg ist wie folgt ausgebildet: Die Gebäudeabluft 8 wird über das geöffnete Stellglied 6b zur Verdunstungskühlung 5a geführt. In der Verdunstungskühlung 5a wird befeuchtet und somit adiabat gekühlt. Die adiabat befeuchtete Luft strömt zusammen mit nicht verdunstetem, jedoch gekühltem Wasser durch die Kühlseite 4a des Sorptionswärmetauschers 2a. Anschließend wird die Luft an den Fortluftanschluss 9 fortgeführt. Durch die geschlossenen Ventile 6a und 6d wird ein Vermischen der beiden Luftströme verhindert.

Während der Desorption strömt erhitzte Außenluft (ca. 65°C bis 85°C) vom Anschluss 7a über die Sorptionsseite 3a und wird über die geöffnete Klappe 6d dem Fortluftanschluss 9 zugeführt. Beim Durchströmen des Sorptionskanals 3a wird das adsorbierte Wasser aus dem Sorptionsmaterial ausgetrieben und mit der Strömung fort geführt. Um die Außenluft zu erhitzen, ist eine entsprechende Außenlufteinheit vorzusehen. Die geschlossenen Klappen 6a, 6b und 6c stellen sicher, dass kein erzwungener Luftwechsel auf der Kühlseite 4a stattfindet. Weiterhin wird sichergestellt, dass der Sorptionswärmetauscherkreislauf 14a bzw. der entsprechende Sorptionswärmetauscher weder mit dem Gebäudeabluftanschluss 8 noch mit dem Gebäudezuluftanschluss 10 hydraulisch verbunden ist.

Während der Zwischenkühlung strömt unbehandelte Außenluft vom Anschluss 7a über das geöffnete Stellglied 6a zu der Befeuchtungseinheit 5a. Nach der Befeuchtung wird der Luftstrom durch die Kühlseite 4a des Sorptionswärmetauschers 2a und anschließend zum Anschluss der Fortluft 9 geführt. Die Klappen 6b, 6c und 6d sind geschossen, damit kein erzwungener Luftwechsel auf der Sorptionsseite 3a stattfinden. Wie bei der Desorption besteht auch im Fall der Zwischenkühlung keine hydraulische Verbindung zwischen der Sorptionswärmetauscherkreislauf 14a und den Gebäudeabluft- bzw. -zuluftanschluss (8 bzw. 10).

Für alle drei Phasen gilt Gleiches analog für den Sorptionswärmetauscherkreislauf 14b.

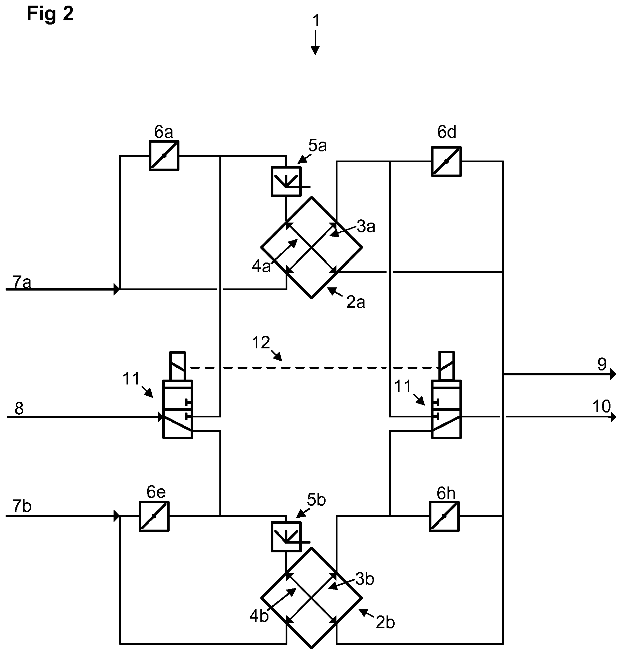

Auf die vorstehend beschriebene Weise lässt sich die Anzahl der Schalteinheiten 6a bis 6h auf insgesamt acht reduzieren. Zu beachten ist auch, dass die Stellglieder 6b und 6f sowie die Stellglieder 6c und 6g gekoppelt sind. D. h., es ist immer nur eins der gekoppelten Stellglieder geöffnet, während das andere geschossen ist und umgekehrt. Dieser Umstand führt bei einer weiteren Ausführungsform zur weiteren Reduzierung der Anzahl der Schalteinheiten 6a bis 6h und ist in Fig. 2 dargestellt.

Fig. 2 zeigt schematisch das Schaltungsschema nach Fig.1 mit sechs als Stellglieder ausgebildeten Schalteinheiten 6a bis 6h, wobei die gekoppelten Schalteinheiten 6b und 6f sowie 6c und 6g nach Fig. 1 jeweils paarweise zu einer gemeinsamen Schalteinheit 11 zusammengefasst sind. Die gemeinsamen Schalteinheiten 11 sind als Mehr-Wege-Schalteinheiten 11 ausgebildet, genauer vorliegend als 3/2-Wegeklappe.

Da sich jeweils die beiden als 3/2-Wegeklappe ausgebildeten Schalteinheiten 6b und 6f sowie 6c und 6g nach Fig. 1 in jeder Betriebssituation in der gleichen Stellung befinden, ist es einfach möglich, einen gemeinsamen Antrieb 12 für beide 3/2-Wegeklappen 11 zu nutzen. Hierdurch wird der Aufwand zum Betreiben der Vorrichtung 1 reduziert.

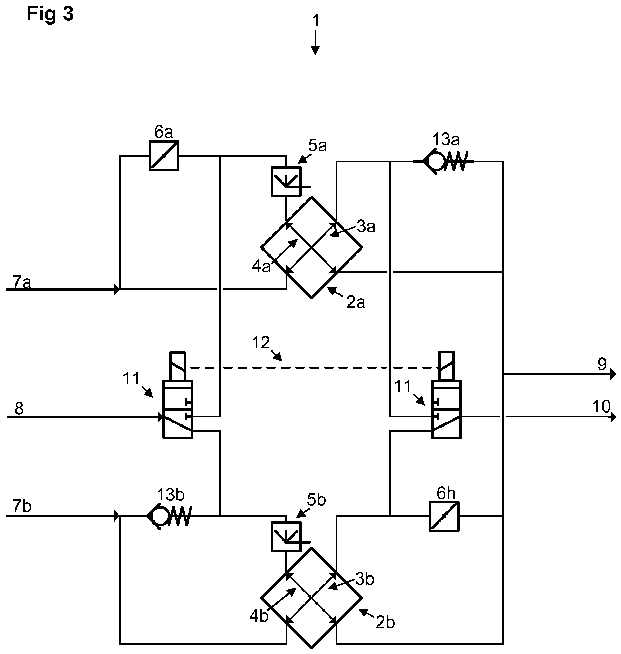

Fig. 3 zeigt schematisch das Schaltungsschema nach Fig. 2 mit zwei als Rückschlagklappen 13a, 13b ausgebildete Schalteinheiten. In der in Fig. 3 dargestellten Ausführungsform sind die Schalteinheiten 6d und 6e als Rückschlagklappen 13a und 13b ausgebildet.

Die Rückschlagklappen 13a, 13b sind als vorgespannte Rückschlagklappen ohne aktiven Antrieb ausgeführt. Dabei können die Rückschlagklappen 13a, 13b entweder die Schalteinheit 6a oder 6d ersetzen und/oder 6e oder 6h ersetzen. In Fig. 3 sind die Schalteinheiten 6d und 6e nach Fig. 2 als Rückschlagklappen 13a, 13b ausgebildet. Jede Rückschlagklappe 13a, 13b oder auch jedes Rückschlagventil 13a, 13b ist nur während einer der drei Betriebsphasen geöffnet. Während der anderen zwei Modi/Phasen ist das entsprechende Rückschlagventil 13a, 13b geschlossen. Somit ist die Vorspannung der Rückschlagklappen 13a, 13b ausreichend zu bemessen, sodass die entsprechende Rückschlagklappe 13a, 13b während der unterschiedlichen Betriebsphasen, in denen eine Öffnung der Rückschlagklappe 13a, 13b nicht erforderlich ist, verschossen bleibt. In dem Modus, in dem die Rückschlagklappe 13a, 13b geöffnet sein muss, sind alle anderen möglichen Luftwege durch das Leitungssystem durch die angetriebenen Klappen 6a, 6h, 11 verschlossen. Somit öffnet sich die entsprechend Rückschlagklappe 13a, 13b und eine höhere Lüfterleistung wird benötigt, um die Rückschlagklappe 13a, 13b geöffnet zu halten. Die Ausbildung einer Schalteinheit als Rückschlagklappe 13a, 13b ist kostengünstiger als eine Ausbildung als Auf/Zu-Klappe mit Motor. Des Weiteren wird der Wartungsaufwand gesenkt, da eine Rückschlagklappe 13a, 13b verglichen mit einer motorisierten Auf/Zu-Klappe mechanisch einfacher ausgebildet ist. Außerdem werden für dieses Beschaltungsschema zwei Antriebe weniger benötigt als beispielsweise in dem Ausführungsbeispiel nach Fig. 1 oder Fig. 2. Dadurch verringert sich automatisch der elektrische Verschaltungsaufwand.

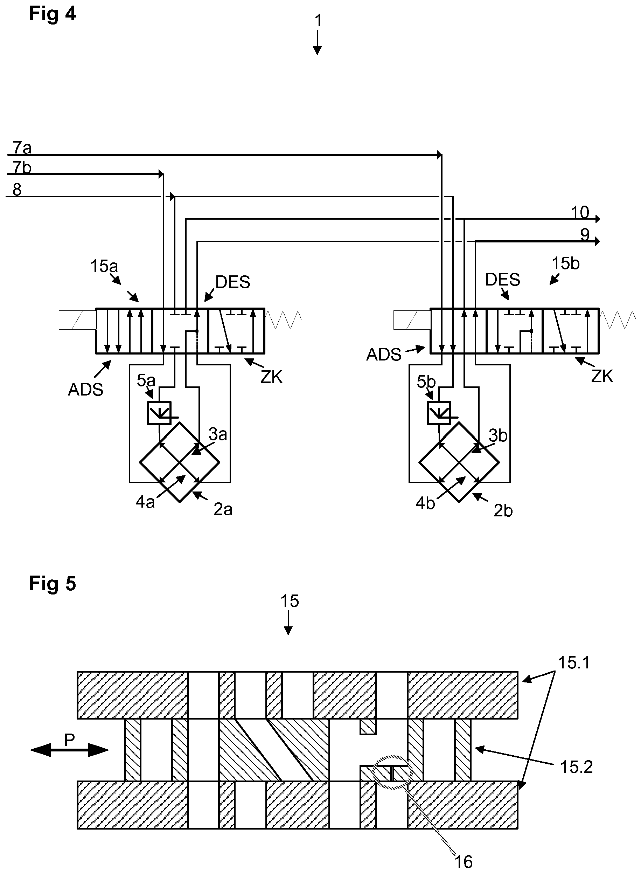

Fig. 4 zeigt schematisch das Schaltungsschema nach Fig. 1 mit zwei als Schieberegister 15a, 15b ausgebildeten Schalteinheiten 6a-6h. Dargestellt sind auch die Luftströme Außenluft 7a, 7b, Zuluft 10, Abluft 8 und Fortluft 9. Um die Anzahl der Antriebe für die Schalteinheiten 6 weiter zu verringern, können alle als Klappen ausgebildeten

Schalteinheiten 6 durch zwei Schieberegister 15a, 15b mit je acht Anschlüssen und drei Schaltstellungen für die Betriebsmodi Adsorption (ADS), Desorption (DES) und Zwischenkühlung (ZK) ersetzt werden. Das Schieberegister 15a, 15b ist in dem Ausführungsbeispiel nach Fig. 4 als ein 8/3-Wege-Ventil ausgebildet mit für die Raumlufttechnik geeigneten Querschnitten und Strömungswiderständen. Wie in Fig. 4 gezeigt, sind die Phasen oder Betriebsmodi in folgender Reihenfolge angeordnet: links Adsorption, mittig Desorption und rechts Zwischenkühlen.

Durch eine derartige Konstruktion sind nur noch zwei lineare Antriebe erforderlich. Daraus ergibt sich, dass die Anzahl der Fehlerquellen reduziert ist. Die Schieberegister 15a, 15b sind so konstruiert, dass ausschließlich die drei vorgesehenen Betriebsmodi einstellbar sind. Ein fehlerhafter, falscher Modus aufgrund einer falsch stehenden Klappe ist alleine durch die Geometrie des Registers 15a, 15b nicht möglich. Weiterhin ist die Kühlseite 4a, 4b des jeweiligen Sorptionswärmetauschers 2a, 2b während der Desorption verschlossen. Dadurch findet kein ungewollter Luftwechsel auf dieser Seite des Sorptionswärmetauschers 2a, 2b statt und somit verdunstet weniger Wasser auf dieser Seite. Dadurch, dass weniger Wasser verdunstet, erhöht sich der Wirkungsgrad der Sorptionswärmetauschervorrichtung 1 signifikant. Um dem ansteigenden Druck durch verdunstendes Wasser auf der Kühlseite während der Desorption entgegenzuwirken, ist im Schieberegister 15a, 15b eine Verbindung 16, wie in Fig. 2 dargestellt, mit kleinem Durchmesser von Kühlseite 4a, 4b zur Fortluft 9 oder auch eine Durchgangsöffnung vorgesehen.

Fig. 5 zeigt schematisch einen Querschnitt einer Ausführungsform des Schieberegisters 15. die Ausführungsform ist analog zu dem Schaltbild nach Fig. 4 dargestellt, d. h., wenn der Schieber 15.2 sich ganz rechts befindet, ist der Sorptionswärmetauscher 2a, 2b für die Adsorption geschaltet, in der Mitte wird die Desorption aktiv und ist der Schieber 15.2 ganz nach links geschoben, wird der Sorptionswärmetauscher 2a, 2b zwischengekühlt. Alternativ kann das Schieberegister 15 statt linear auch rotatorisch ausgeführt sein. Das Umschalten wird dann entsprechend durch eine Drehbewegung des Schieberegisters 15 erreicht. Das Schieberegister 15 umfasst zwei Anschlussplatten 15.1 und den bewegbar ausgeführten Schieber 15.2. Über die Bewegung des Schiebers 15.2 wird die Luft entsprechend von bzw. zu den korrespondierenden Anschlüssen geleitet. Die Bewegung des Schiebers 15.2 ist durch den Pfeil P symbolisch dargestellt.

## Patentansprüche

1. Verfahren zur Steuerung einer als offenes System ausgeführten Sorptionswärmetauschervorrichtung (1), insbesondere einer Sorptionswärmetauschervorrichtung (1) zum direkten Frischluftkonditionieren, bei der mindestens zwei Sorptionswärmetauscher (2a, 2b) mit je einer Sorptionsseite (3a, 3b) und einer Kühlseite (4a, 4b) wechselseitig in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen,
- **dadurch gekennzeichnet, dass** in der Adsorptionsphase Außenluft (7a, 7b) durch die Sorptionsseite (3a, 3b) des Sorptionswärmetauschers (2a, 2b) geführt und anschließend in einen Gebäudezuluftkanal (10) geleitet wird, wobei ein im Sorptionswärmetauscher (2a, 2b) befindliches Sorbens durch Aufnahme von Feuchtigkeit aus der Außenluft (7a, 7b) beladen wird, wobei zum gleichzeitigen Kühlen der Außenluft (7a, 7b) und Abführen entstehender Sorptionswärme auf der Kühlseite (4a, 4b) des Sorptionswärmetauschers (2a, 2b) Gebäudeabluft genutzt wird, welche vor dem Eintritt in den Sorptionswärmetauscher (2a, 2b) durch eine adiabate Verdunstungskühlung (5a, 5b) gekühlt wird, und wobei die nach dem Prozess warme und feuchte Gebäudeabluft als Fortluft (9) fortgeführt wird,
- wobei in der Desorptionsphase in dem Sorptionswärmetauscher (2a, 2b), welcher gerade nicht für die Frischluftkonditionierung genutzt wird, das adsorbierte Wasser aus dem Sorbens ausgetrieben wird, wofür erhitzte Luft (7a, 7b) bei circa 65-85°C durch den Sorptionskanal geleitet und als Fortluft (9) fortgeführt wird, und
- wobei der nach der Desorptionsphase aufgeheizten Sorptionswärmetauscher (2a, 2b) in der Zwischenkühlphase zwischen der Desorptionsphase und der Adsorptionsphase gekühlt wird, wofür Außenluft (7a, 7b) durch die adiabate Verdunstungskühlung (5a, 5b) geleitet und einem Luftschacht für Fortluft (9) zugeführt wird, wodurch der Sorptionswärmetauscher (2a, 2b) von der Kühlseite (4a, 4b) aus gekühlt wird,
wobei maximal vier Schalteinheiten (6a-6d, 6e-6h) pro Sorptionswärmetauscher (2a, 2b) angesteuert werden, um die zwei Betriebsmodi mit den drei Phasen der Sorptionswärmetauscher (2a, 2b) zu realisieren.

2. Verfahren nach Anspruch 1, **dadurch gekennzeichnet, dass** jeweils eine der Schalteinheiten (6a bis 6h) eines Sorptionswärmetauscherkreises (14a, 14b) gekoppelt mit einer dazu korrespondierenden Schalteinheit (6) des anderen Sorptionswärmetauscherkreises (14b, 14a) angesteuert wird.

3. Verfahren nach den Ansprüchen 1 oder 2, **dadurch gekennzeichnet, dass** die gekoppelten Schalteinheiten (6) über einen gemeinsamen Antrieb (12) angesteuert werden.

4. Verfahren nach einem der vorherigen Ansprüche 1 bis 3, **dadurch gekennzeichnet, dass** Außenluft welche, je nach Betriebszustand des jeweiligen Sorptionswärmetauschers (2a, 2b), von einer Außenluftzufuhreinrichtung zuvor erwärmt oder nicht erwärmt wird, jeweils separat dem jeweiligen Sorptionswärmetauscher (2) zugeführt wird.

5. Vorrichtung zur Steuerung einer als offenes System ausgeführten Sorptionswärmetauschervorrichtung (1), insbesondere einer Sorptionswärmetauschervorrichtung (1) zum direkten Frischluftkonditionieren, bei der mindestens zwei Sorptionswärmetauscher (2a, 2b) mit je einer Sorptionsseite (3a, 3b) und einer Kühlseite (4a, 4b) wechselseitig in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen,
- **dadurch gekennzeichnet, dass** in der Adsorptionsphase Außenluft (7a, 7b) durch die Sorptionsseite (3a, 3b) des Sorptionswärmetauschers (2a, 2b) geführt und anschließend in einen Gebäudezuluftkanal (10) geleitet wird, wobei ein im Sorptionswärmetauschers (2a, 2b) befindliches Sorbens durch Aufnahme von Feuchtigkeit aus der Außenluft (7a, 7b) beladen wird, wobei zum gleichzeitigen Kühlen der Außenluft (7a, 7b) und Abführen entstehender Sorptionswärme auf der Kühlseite (4a, 4b) des Sorptionswärmetauschers (2a, 2b) Gebäudeabluft genutzt wird, welche vor dem Eintritt in den Sorptionswärmetauscher (2a, 2b) durch eine adiabate Verdunstungskühlung (5a, 5b) gekühlt wird, und wobei die nach dem Prozess warme und feuchte Gebäudeabluft als Fortluft (9) fortgeführt wird,
- wobei in der Desorptionsphase in dem Sorptionswärmetauscher (2a, 2b), welcher gerade nicht für die Frischluftkonditionierung genutzt wird, das adsorbierte Wasser aus dem Sorbens ausgetrieben wird, wofür erhitzte Luft (7a, 7b) bei circa 65-85°C durch den Sorptionskanal geleitet und als Fortluft (9) fortgeführt wird, und
- wobei der nach der Desorptionsphase aufgeheizten Sorptionswärmetauscher (2a, 2b) in der Zwischenkühlphase zwischen der Desorptionsphase und der Adsorptionsphase gekühlt wird, wofür Außenluft (7a, 7b) durch die adiabate Verdunstungskühlung (5a, 5b) geleitet und einem Luftschacht für Fortluft (9) zugeführt wird, wodurch der Sorptionswärmetauscher (2a, 2b) von der Kühlseite (4a, 4b) aus gekühlt wird,
wobei maximal vier Schalteinheiten (6a-6d, 6e-6h) pro Sorptionswärmetauscher (2a, 2b) angesteuert werden, um die zwei Betriebsmodi mit den drei Phasen der Sorptionswärmetauscher (2a, 2b) zu realisieren.

6. Vorrichtung nach Anspruch 5, **dadurch gekennzeichnet, dass** jeweils mindestens eine Schalteinheit (6a-6d, 6e-6h) eines Sorptionswärmetauscherkreises (14a, 14b) mit einer dazu korrespondierenden Schalteinheit (6e-6h und 6a-6d) des anderen Sorptionswärmetauscherkreises (14b, 14a) gekoppelt ist.

7. Vorrichtung nach den Ansprüchen 5 oder 6, **dadurch gekennzeichnet, dass** mindestens zwei miteinander gekoppelte Schalteinheiten (6a,6e; 6b,6f; 6c,6g; 6d,6h) jeweils als ein gemeinsames Mehrwegeventil (11) ausgebildet sind.

8. Vorrichtung nach einem der vorherigen Ansprüche 5 bis 7, **dadurch gekennzeichnet, dass** mindestens zwei Mehrwegeventile (11) mit einem gemeinsamen Antrieb (12) angesteuert sind.

9. Vorrichtung nach einem der vorherigen Ansprüche 5 bis 8, **dadurch gekennzeichnet, dass** mindestens eine Schalteinheit (6a bis 6h) ein vorgespanntes Rückschlagventil (13a, 13b) umfasst.

10. Vorrichtung nach einem der vorherigen Ansprüche 5 bis 9, **dadurch gekennzeichnet, dass** alle Schalteinheiten (6a bis 6d oder 6f bis 6h) eines Sorptionswärmetauschers (2a, 2b), bevorzugt alle Schalteinheiten (6a bis 6h) aller Sorptionswärmetauscher (2a, 2b), als eine gemeinsame Mehrwegeschalteinheit (15a, 15b) ausgebildet sind.

11. Vorrichtung nach einem der Anspruche 5 bis 10, **dadurch gekennzeichnet, dass** ein über Schalteinheiten (6a bis 6h) verzweigtes Leitungssystem mit mehreren Leitungsabschnitten vorgesehen ist, wobei für jeden Sorptionswärmetauscher (2a, 2b) ein separates Leitungssystem (7a, 7b) für die Außenluftzufuhreinrichtung vorgesehen ist.

12. Vorrichtung nach Anspruch 11, **dadurch gekennzeichnet, dass** eine separate Außenluftzufuhreinrichtung vorgesehen ist, welche je nach Betriebszustand der Sorptionswärmetauscher (2a, 2b) die Außenluft über einen erwärmungseinheitenfreien Pfad oder einen Pfad mit Erwärmungseinheiten zu den jeweiligen separaten Leitungssystemen (7a, 7b) leitet.

13. Eine als offenes System ausgeführte Sorptionswärmetauschervorrichtung (1), insbesondere eine Sorptionswärmetauschervorrichtung (1) zum direkten Frischluftkonditionieren, bei der mindestens zwei Sorptionswärmetauscher (2a, 2b) mit je einer Sorptionsseite 3a, 3b und einer Kühlseite 4a, 4b wechselseitig in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen,
- wobei in der Adsorptionsphase Außenluft (7a, 7b) durch die Sorptionsseite (3a, 3b) des Sorptionswärmetauschers (2a, 2b) geführt und anschließend in einen Gebäudezuluftkanal (10) geleitet wird, wobei ein im Sorptionswärmetauschers (2a, 2b) befindliches Sorbens durch Aufnahme von Feuchtigkeit aus der Außenluft (7a, 7b) beladen wird, wobei zum gleichzeitigen Kühlen der Außenluft (7a, 7b) und Abführen entstehender Sorptionswärme auf der Kühlseite (4a, 4b) des Sorptionswärmetauschers (2a, 2b) Gebäudeabluft genutzt wird, welche vor dem Eintritt in den Sorptionswärmetauscher (2a, 2b) durch eine adiabate Verdunstungskühlung (5a, 5b) gekühlt wird, und wobei die nach dem Prozess warme und feuchte Gebäudeabluft als Fortluft (9) fortgeführt wird,
- wobei in der Desorptionsphase in dem Sorptionswärmetauscher (2a, 2b), welcher gerade nicht für die Frischluftkonditionierung genutzt wird, das adsorbierte Wasser aus dem Sorbens ausgetrieben wird, wofür erhitzte Luft (7a, 7b) bei circa 65-85°C durch den Sorptionskanal geleitet und als Fortluft (9) fortgeführt wird, und
- wobei der nach der Desorptionsphase aufgeheizten Sorptionswärmetauscher (2a, 2b) in der Zwischenkühlphase zwischen der Desorptionsphase und der Adsorptionsphase gekühlt wird, wofür Außenluft (7a, 7b) durch die adiabate Verdunstungskühlung (5a, 5b) geleitet und einem Luftschacht für Fortluft (9) zugeführt wird, wodurch der Sorptionswärmetauscher (2a, 2b) von der Kühlseite (4a, 4b) aus gekühlt wird, **dadurch gekennzeichnet**, die Sorptionswärmetauschervorrichtung eine Vorrichtung (1) nach einem der vorherigen Ansprüche 5 bis 12 aufweist.

## Claims

1. Method for controlling a sorption heat exchanger apparatus (1) configured as an open system, in particular a sorption heat exchanger apparatus (1) for direct fresh air conditioning, in which at least two sorption heat exchangers (2a, 2b) with a respective sorption side (3a, 3b) and a respective cooling side (4a, 4b) are alternately operated in an adsorption mode with an adsorption phase and a regeneration mode with an intermediate cooling phase and a desorption phase, in order to carry out quasi-continuous conditioning,
- **characterized in that**, in the adsorption phase, outside air (7a, 7b) is guided through the sorption side (3a, 3b) of the sorption heat exchanger (2a, 2b) and then channelled into a building supply air duct (10), wherein a sorbent in the sorption heat exchanger (2a, 2b) is laden by taking up moisture from the outside air (7a, 7b), wherein, in order to simultaneously cool the outside air (7a, 7b) and dissipate resulting sorption heat on the cooling side (4a, 4b) of the sorption heat exchanger (2a, 2b), use is made of building exhaust air which, prior to entering the sorption heat exchanger (2a, 2b), is cooled by an adiabatic evaporation cooling system (5a, 5b), and wherein the building exhaust air, which is warm and moist after the process, is removed as outgoing air (9),
- wherein, in the desorption phase in the sorption heat exchanger (2a, 2b) which is currently not being used for fresh air conditioning, the adsorbed water is driven out of the sorbent, for which purpose heated air (7a, 7b) at about 65-85°C is channelled through the sorption duct and removed as outgoing air (9), and
- wherein the sorption.heat exchanger (2a, 2b) heated after the desorption phase is cooled in the intermediate cooling phase between the desorption phase and the adsorption phase, for which purpose outside air (7a, 7b) is channelled through the adiabatic evaporation cooling system (5a, 5b) and supplied to an air shaft for outgoing air (9), with the result that the sorption heat exchanger (2a, 2b) is cooled from the cooling side (4a, 4b),
wherein a maximum of four switching units (6a-6d, 6e-6h) are activated for each sorption heat exchanger (2a, 2b) in order to implement the two operating modes with the three phases of the sorption heat exchangers (2a, 2b).

2. Method according to Claim 1, **characterized in that** in each case one of the switching units (6a to 6h) of a sorption heat exchanger circuit (14a, 14b) is activated while being coupled to a switching unit (6), corresponding thereto, of the other sorption heat exchanger circuit (14b, 14a).

3. Method according to Claims 1 and 2, **characterized in that** the coupled switching units (6) are activated via a common drive (12).

4. Method according to one of the preceding Claims 1 to 3, **characterized in that** outside air which, depending on the operating state of the respective sorption heat exchanger (2a, 2b), is heated beforehand by an outside air feeding device or is not heated is in each case fed separately to the respective sorption heat exchanger (2).

5. Apparatus for controlling a sorption heat exchanger apparatus (1) configured as an open system, in particular a sorption heat exchanger apparatus (1) for direct fresh air conditioning, in which at least two sorption heat exchangers (2a, 2b) with a respective sorption side (3a, 3b) and a respective cooling side (4a, 4b) are alternately operated in an adsorption mode with an adsorption phase and a regeneration mode with an intermediate cooling phase and a desorption phase, in order to carry out quasi-continuous conditioning,
- **characterized in that**, in the adsorption phase, outside air (7a, 7b) is guided through the sorption side (3a, 3b) of the sorption heat exchanger (2a, 2b) and then channelled into a building supply air duct (10), wherein a sorbent in the sorption heat exchanger (2a, 2b) is laden by taking up moisture from the outside air (7a, 7b), wherein, in order to simultaneously cool the outside air (7a, 7b) and dissipate resulting sorption heat on the cooling side (4a, 4b) of the sorption heat exchanger (2a, 2b), use is made of building exhaust air which, prior to entering the sorption heat exchanger (2a, 2b), is cooled by an adiabatic evaporation cooling system (5a, 5b), and wherein the building exhaust air, which is warm and moist after the process, is removed as outgoing air (9),
- wherein, in the desorption phase in the sorption heat exchanger (2a, 2b) which is currently not being used for fresh air conditioning, the adsorbed water is driven out of the sorbent, for which purpose heated air (7a, 7b) at about 65-85°C is channelled through the sorption duct and removed as outgoing air (9), and
- wherein the sorption heat exchanger (2a, 2b) heated after the desorption phase is cooled in the intermediate cooling phase between the desorption phase and the adsorption phase, for which purpose outside air (7a, 7b) is channelled through the adiabatic evaporation cooling system (5a, 5b) and supplied to an air shaft for outgoing air (9), with the result that the sorption heat exchanger (2a, 2b) is cooled from the cooling side (4a, 4b),
wherein a maximum of four switching units (6a-6d, 6e-6h) are activated for each sorption heat exchanger (2a, 2b) in order to implement the two operating modes with the three phases of the sorption heat exchangers (2a, 2b).

6. Apparatus according to Claim 5, **characterized in that** in each case at least one switching unit (6a-6d, 6e-6h) of a sorption heat exchanger circuit (14a, 14b) is coupled with a switching unit (6e-6h and 6a-6d), corresponding thereto, of the other sorption heat exchanger circuit (14b, 14a).

7. Apparatus according to Claims 5 and 6, **characterized in that** at least two coupled-together switching units (6a, 6e; 6b, 6f; 6c, 6g; 6d, 6h) are each designed as a common multi-way valve (11).

8. Apparatus according to one of the preceding Claims 5 to 7, **characterized in that** at least two multi-way valves (11) are activated by a common drive (12).

9. Apparatus according to one of the preceding Claims 5 to 8, **characterized in that** at least one switching unit (6a to 6h) comprises a preloaded nonreturn valve (13a, 13b).

10. Apparatus according to one of the preceding Claims 5 to 9, **characterized in that** all the switching units (6a to 6d or 6f to 6h) of a sorption heat exchanger (2a, 2b), preferably all the switching units (6a to 6h) of all the sorption heat exchangers (2a, 2b), are designed as a common multi-way switching unit (15a, 15b).

11. Apparatus according to one of Claims 5 to 10, **characterized in that** a line system which is branched via switching units (6a to 6h) and has a plurality of line sections is provided, wherein a separate line system (7a, 7b) for the outside air feeding device is provided for each sorption heat exchanger (2a, 2b).

12. Apparatus according to Claim 11, **characterized in that** a separate outside air feeding device is provided which, depending on the operating state of the sorption heat exchangers (2a, 2b), channels the outside air over a heating-unit-free path or a path with heating units to the respective separate line systems (7a, 7b).

13. A sorption heat exchanger apparatus (1) configured as an open system, in particular a sorption heat exchanger apparatus (1) for direct fresh air conditioning, in which at least two sorption heat exchangers (2a, 2b) with a respective sorption side (3a, 3b) and a respective cooling side (4a, 4b) are alternately operated in an adsorption mode with an adsorption phase and a regeneration mode with an intermediate cooling phase and a desorption phase, in order to carry out quasi-continuous conditioning,
- wherein, in the adsorption phase, outside air (7a, 7b) is guided through the sorption side (3a, 3b) of the sorption heat exchanger (2a, 2b) and then channelled into a building supply air duct (10), wherein a sorbent in the sorption heat exchanger (2a, 2b) is laden by taking up moisture from the outside air (7a, 7b), wherein, in order to simultaneously cool the outside air (7a, 7b) and dissipate resulting sorption heat on the cooling side (4a, 4b) of the sorption heat exchanger (2a, 2b), use is made of building exhaust air which, prior to entering the sorption heat exchanger (2a, 2b), is cooled by an adiabatic evaporation cooling system (5a, 5b), and wherein the building exhaust air, which is warm and moist after the process, is removed as outgoing air (9),
- wherein, in the desorption phase in the sorption heat exchanger (2a, 2b) which is currently not being used for fresh air conditioning, the adsorbed water is driven out of the sorbent, for which purpose heated air (7a, 7b) at about 65-85°C is channelled through the sorption duct and removed as outgoing air (9), and
- wherein the sorption heat exchanger (2a, 2b) heated after the desorption phase is cooled in the intermediate cooling phase between the desorption phase and the adsorption phase, for which purpose outside air (7a, 7b) is channelled through the adiabatic evaporation cooling system (5a, 5b) and supplied to an air shaft for outgoing air (9), with the result that the sorption heat exchanger (2a, 2b) is cooled from the cooling side (4a, 4b),
**characterized in that** the sorption heat exchanger apparatus comprises an apparatus (1) according to one of the preceding Claims 5 to 12.

## Revendications

1. Procédé de commande d'un dispositif d'échangeur de chaleur à sorption (1) réalisé sous forme de système ouvert, en particulier d'un dispositif d'échangeur de chaleur à sorption (1) pour le conditionnement direct d'air frais, dans lequel on fait fonctionner au moins deux échangeurs de chaleur à sorption (2a, 2b) comportant chacun un côté de sorption (3a, 3b) et un côté de refroidissement (4a, 4b) alternativement dans un mode d'adsorption avec une phase d'adsorption et dans un mode de régénération avec une phase de refroidissement intermédiaire et une phase de désorption, afin d'opérer un conditionnement quasi continu,
- **caractérisé en ce que**
dans la phase d'adsorption, on conduit de l'air extérieur (7a, 7b) à travers le côté de sorption (3a, 3b) de l'échangeur de chaleur à sorption (2a, 2b) et on le mène ensuite dans un canal d'air frais de bâtiment (10), dans lequel on charge un sorbant se trouvant dans l'échangeur de chaleur à sorption (2a, 2b) par prise d'humidité à partir de l'air extérieur (7a, 7b), dans lequel on utilise pour simultanément refroidir l'air extérieur (7a, 7b) et évacuer la chaleur de sorption produite sur le côté de refroidissement (4a, 4b) de l'échangeur de chaleur à sorption (2a, 2b) de l'air d'évacuation du bâtiment, que l'on refroidit avant l'entrée dans l'échangeur de chaleur à sorption (2a, 2b) par un refroidissement par évaporation adiabatique (5a, 5b), et dans lequel on transporte ensuite l'air d'évacuation du bâtiment chaud et humide après le traitement sous forme d'air sortant (9),
- dans lequel dans la phase de désorption dans l'échangeur de chaleur à sorption (2a, 2b), qui n'est précisément pas utilisé pour le conditionnement d'air frais, on extrait l'eau adsorbée hors du sorbant, opération pour laquelle on mène de l'air chauffé (7a, 7b) à environ 65-85°C à travers le canal de sorption et on le transporte ensuite sous forme d'air sortant (9), et
- dans lequel on refroidit l'échangeur de chaleur à sorption chauffé après la phase de désorption (2a, 2b) dans la phase de refroidissement intermédiaire entre la phase de désorption et la phase d'adsorption, opération pour laquelle on mène de l'air extérieur (7a, 7b) à travers le refroidissement par évaporation adiabatique (5a, 5b) et on l'envoie à un puits d'air pour l'air sortant (9), opération par laquelle on refroidit l'échangeur de chaleur à sorption (2a, 2b) à partir du côté de refroidissement (4a, 4b),
dans lequel on commande au maximum quatre unités de commutation (6a-6d, 6e-6h) par échangeur de chaleur à sorption (2a, 2b), afin de réaliser les deux modes de fonctionnement avec les trois phases des échangeurs de chaleur à sorption (2a, 2b).

2. Procédé selon la revendication 1, **caractérisé en ce que** l'on commande respectivement une des unités de commutation (6a à 6h) d'un circuit d'échangeur de chaleur à sorption (14a, 14b) de façon couplée à une unité de commutation (6) qui lui correspond de l'autre circuit d'échangeur de chaleur à sorption (14b, 14a).

3. Procédé selon les revendications 1 ou 2, **caractérisé en ce que** l'on commande les unités de commutation couplées (6) au moyen d'un entraînement commun (12).

4. Procédé selon l'une quelconque des revendications précédentes 1 à 3, **caractérisé en ce que** l'on fournit chaque fois séparément à l'échangeur de chaleur à sorption respectif (2), de l'air extérieur qui est au préalable chauffé par un dispositif d'arrivée d'air extérieur ou qui n'est pas chauffé selon l'état de fonctionnement de l'échangeur de chaleur à sorption respectif (2a, 2b).

5. Dispositif de commande d'un dispositif d'échangeur de chaleur à sorption (1) réalisé sous forme de système ouvert, en particulier d'un dispositif d'échangeur de chaleur à sorption (1) pour le conditionnement direct d'air frais, dans lequel on fait fonctionner au moins deux échangeurs de chaleur à sorption (2a, 2b) comportant chacun un côté de sorption (3a, 3b) et un côté de refroidissement (4a, 4b) alternativement dans un mode d'adsorption avec une phase d'adsorption et dans un mode de régénération avec une phase de refroidissement intermédiaire et une phase de désorption, afin d'opérer un conditionnement quasi continu,
- **caractérisé en ce que**
dans la phase d'adsorption, on conduit de l'air extérieur (7a, 7b) à travers le côté de sorption (3a, 3b) de l'échangeur de chaleur à sorption (2a, 2b) et on le mène ensuite dans un canal d'air frais de bâtiment (10), dans lequel on charge un sorbant se trouvant dans l'échangeur de chaleur à sorption (2a, 2b) par prise d'humidité à partir de l'air extérieur (7a, 7b), dans lequel on utilise pour simultanément refroidir l'air extérieur (7a, 7b) et évacuer la chaleur de sorption produite sur le côté de refroidissement (4a, 4b) de l'échangeur de chaleur à sorption (2a, 2b) de l'air d'évacuation du bâtiment, que l'on refroidit avant l'entrée dans l'échangeur de chaleur à sorption (2a, 2b) par un refroidissement par évaporation adiabatique (5a, 5b), et dans lequel on transporte ensuite l'air d'évacuation du bâtiment chaud et humide après le traitement sous forme d'air sortant (9),
- dans lequel dans la phase de désorption dans l'échangeur de chaleur à sorption (2a, 2b), qui n'est précisément pas utilisé pour le conditionnement d'air frais, on extrait l'eau adsorbée hors du sorbant, opération pour laquelle on mène de l'air chauffé (7a, 7b) à environ 65-85°C à travers le canal de sorption et on le transporte ensuite sous forme d'air sortant (9), et
- dans lequel on refroidit l'échangeur de chaleur à sorption chauffé après la phase de désorption (2a, 2b) dans la phase de refroidissement intermédiaire entre la phase de désorption et la phase d'adsorption, opération pour laquelle on mène de l'air extérieur (7a, 7b) à travers le refroidissement par évaporation adiabatique (5a, 5b) et on l'envoie à un puits d'air pour l'air sortant (9), opération par laquelle on refroidit l'échangeur de chaleur à sorption (2a, 2b) à partir du côté de refroidissement (4a, 4b),
dans lequel on commande au maximum quatre unités de commutation (6a-6d, 6e-6h) par échangeur de chaleur à sorption (2a, 2b), afin de réaliser les deux modes de fonctionnement avec les trois phases des échangeurs de chaleur à sorption (2a, 2b).

6. Dispositif selon la revendication 5, **caractérisé en ce que** chaque fois au moins une unité de commutation (6a-6d, 6e-6h) d'un circuit d'échangeur de chaleur à sorption (14a, 14b) est couplée à une unité de commutation (6e-6h et 6a-6d) qui lui correspond de l'autre circuit d'échangeur de chaleur à sorption (14b, 14a).

7. Dispositif selon les revendications 5 ou 6, **caractérisé en ce qu'**au moins deux unités de commutation couplées l'une à l'autre (6a, 6e; 6b, 6f; 6c, 6g; 6d, 6h) sont respectivement réalisées sous la forme d'une soupape à plusieurs voies (11) commune.

8. Dispositif selon l'une quelconque des revendications précédentes 5 à 7, **caractérisé en ce qu'**au moins deux soupapes à plusieurs voies (11) sont commandées avec un entraînement commun (12).

9. Dispositif selon l'une quelconque des revendications précédentes 5 à 8, **caractérisé en ce qu'**au moins une unité de commutation (6a à 6h) comprend un clapet antiretour précontraint (13a, 13b).

10. Dispositif selon l'une quelconque des revendications 5 à 9, **caractérisé en ce que** toutes les unités de commutation (6a à 6d ou 6f à 6h) d'un échangeur de chaleur à sorption (2a, 2b), de préférence toutes les unités de commutation (6a à 6h) de tous les échangeurs de chaleur à sorption (2a, 2b), sont réalisés sous la forme d'une unité de commutation à plusieurs voies commune (15a, 15b).

11. Dispositif selon l'une quelconque des revendications 5 à 10, **caractérisé en ce qu'**il est prévu un système de conduites ramifié par des unités de commutation (6a à 6h) avec plusieurs parties de conduite, dans lequel il est prévu pour chaque échangeur de chaleur à sorption (2a, 2b) un système de conduites séparé (7a, 7b) pour le dispositif d'arrivée d'air extérieur.

12. Dispositif selon la revendication 11, **caractérisé en ce qu'**il est prévu un dispositif d'arrivée d'air extérieur séparé, qui conduit l'air extérieur vers les systèmes de conduite respectivement séparés (7a, 7b) par un chemin sans unités de chauffage ou un chemin avec des unités de chauffage, selon l'état de fonctionnement des échangeurs de chaleur à sorption (2a, 2b).

13. Dispositif d'échangeur de chaleur à sorption (1) réalisé sous forme de système ouvert, en particulier dispositif d'échangeur de chaleur à sorption (1) pour le conditionnement direct d'air frais, dans lequel on fait fonctionner au moins deux échangeurs de chaleur à sorption (2a, 2b) comportant chacun un côté de sorption (3a, 3b) et un côté de refroidissement (4a, 4b) alternativement dans un mode d'adsorption avec une phase d'adsorption et dans un mode de régénération avec une phase de refroidissement intermédiaire et une phase de désorption, afin d'opérer un conditionnement quasi continu,
- dans lequel dans la phase d'adsorption, on conduit de l'air extérieur (7a, 7b) à travers le côté de sorption (3a, 3b) de l'échangeur de chaleur à sorption (2a, 2b) et on le mène ensuite dans un canal d'air frais de bâtiment (10), dans lequel on charge un sorbant se trouvant dans l'échangeur de chaleur à sorption (2a, 2b) par prise d'humidité à partir de l'air extérieur (7a, 7b), dans lequel on utilise pour simultanément refroidir l'air extérieur (7a, 7b) et évacuer la chaleur de sorption produite sur le côté de refroidissement (4a, 4b) de l'échangeur de chaleur à sorption (2a, 2b) de l'air d'évacuation du bâtiment, que l'on refroidit avant l'entrée dans l'échangeur de chaleur à sorption (2a, 2b) par un refroidissement par évaporation adiabatique (5a, 5b), et dans lequel on transporte ensuite l'air d'évacuation du bâtiment chaud et humide après le traitement sous forme d'air sortant (9),
- dans lequel dans la phase de désorption dans l'échangeur de chaleur à sorption (2a, 2b), qui n'est précisément pas utilisé pour le conditionnement d'air frais, on extrait l'eau adsorbée hors du sorbant, opération pour laquelle on mène de l'air chauffé (7a, 7b) à environ 65-85°C à travers le canal de sorption et on le transporte ensuite sous forme d'air sortant (9), et
- dans lequel on refroidit l'échangeur de chaleur à sorption chauffé après la phase de désorption (2a, 2b) dans la phase de refroidissement intermédiaire entre la phase de désorption et la phase d'adsorption, opération pour laquelle on mène de l'air extérieur (7a, 7b) à travers le refroidissement par évaporation adiabatique (5a, 5b) et on l'envoie à un puits d'air pour l'air sortant (9), opération par laquelle on refroidit l'échangeur de chaleur à sorption (2a, 2b) à partir du côté de refroidissement (4a, 4b),
**caractérisé en ce que** le dispositif d'échangeur de chaleur à sorption présente un dispositif (1) selon l'une quelconque des revendications précédentes 5 à 12.
